(19) Europäisches Patentamt
European Patent Office
Office européen des brevets

(11) **EP 3 142 372 A1**

(12) **EUROPEAN PATENT APPLICATION**

(43) Date of publication:
**15.03.2017 Bulletin 2017/11**

(51) Int Cl.:
***H04N 21/43*** *(2011.01)* ***H04N 5/04*** *(2006.01)*

(21) Application number: **15306368.0**

(22) Date of filing: **08.09.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Thomson Licensing
92130 Issy-les-Moulineaux (FR)**

(72) Inventors:
• **BORDES, Philippe
35576 Cesson-Sévigné (FR)**

• **CORTES, Guillaume
35576 Cesson-Sévigné (FR)**
• **ANDRIVON, Pierre
35576 Cesson-Sévigné (FR)**
• **URBAN, Fabrice
35576 Cesson-Sévigné (FR)**

(74) Representative: **Huchet, Anne et al
TECHNICOLOR
1-5, rue Jeanne d'Arc
92130 Issy-les-Moulineaux (FR)**

(54) **METHOD AND DEVICE FOR ROBUST TEMPORAL SYNCHRONIZATION OF TWO VIDEO CONTENTS**

(57) Synchronization of two video streams that have been processed in different ways is achieved by generation of logical maps representative of characteristics, such as differences, between sample values and their spatial neighbors in a current stream and in a reference stream. For samples in a current stream and co-located samples in the reference stream, logical maps are generated. Those frames in each stream that have the best fit regarding equal logical map values are aligned to sychronize the streams.

Figure 2

**Description**

FIELD OF THE INVENTION

The present principles relate to synchronization of two video contents of a same scene that have been processed differently.

BACKGROUND OF THE INVENTION

In video production environments, video scenes are often processed or captured with different methods. In some cases, two videos can be of the same scene, however, they can be in different color spaces, for example. There is often a need to synchronize two such video streams, which is challenging given the separate processing they have undergone.

One such use of synchronization of separately processed video streams is in generation of Color Remapping Information. Color Remapping Information (CRI) is information which can be used in mapping one color space to another. This type of information can be useful when converting from Wide Color Gamut (WCG) video to another format, or in Ultra High Definition applications, for example. Color Remapping Information was adopted in ISO/IEC 23008-2:2014/ITU-T H.265:2014 High Efficiency Video Coding (HEVC) specification and is being implemented in the Ultra HD Blu-ray specification. It is also being considered in WD SMPTE ST 2094.

SUMMARY OF THE INVENTION

These and other drawbacks and disadvantages of the prior art are addressed by the present principles, which are directed to a method and apparatus for CRI payload size compression.

According to an aspect of the present principles, there is provided a method for synchronizing separately processed video information. The method comprises receiving a first video stream having a first sample of pictures and receiving a second video stream, the second video stream having a second sample of pictures spatially co-located with respect to said first sample of pictures. The method further comprises generating logical map values for the samples in the pictures of the first and second video streams based on characteristics of their respective samples relative to their spatial neighbors, and further comprises generating a synchronization measurement by finding, at a time offset value, a number of co-located logical map values that are equal in the first and second video streams. The method further comprises determining the time offset value at which the synchronization measure is maximized for the second video stream relative to the first video stream, and aligning the second video stream with the first video stream using the determined time offset value, whereby the first video stream and the second video stream have been dissimilarly processed such that their samples are not equal.

According to another aspect of the present principles, there is provided an apparatus for synchronizing separately processed video information. The apparatus comprises a first receiver for a first video stream having a first sample of pictures, a second receiver for a second video stream, the second video stream having a second sample of pictures spatially co-located with respect to the first sample of pictures. The apparatus further comprises a look up table to generate logical map values for the samples in the pictures of the first and second video streams based on characteristics of their respective samples relative to their spatial neighbors. The apparatus further comprises a first processor that generates a synchronization measurement by finding, at a time offset value, a number of co-located logical map values that are equal in the first and second video streams, and a second processor that determines the time offset value at which the synchronization measure is maximized for the second video stream relative to the first video stream. The apparatus further comprises delay elements to align the second video stream with the first video stream using the determined time offset value, whereby the first video stream and the second video stream have been dissimilarly processed such that their samples are not equal.

According to another aspect of the present principles, there is provided another method for synchronizing separately processed video information. The method comprises receiving a first video stream having a first sample of pictures, and retrieving a second video stream, the second video stream having a second sample of pictures spatially co-located with respect to the first sample of pictures. The method further comprises generating logical map values for the samples in the pictures of the first and second video streams based on characteristics of their respective samples relative to their spatial neighbors, and generating a synchronization measurement by finding, at a time offset value, a number of co-located logical map values that are equal in the first and second video streams. The method further comprises determining the time offset value at which the synchronization measure is maximized for the second video stream relative to the first video stream, and aligning the second video stream with the first video stream using the determined time offset value, whereby the first video stream and the second video stream have been dissimilarly processed such that their samples are not equal.

These and other aspects, features and advantages of the present principles will become apparent from the following detailed description of exemplary embodiments, which is to be read in connection with the accompanying drawings.

BRIEF DESCRIPTION OF THE DRAWINGS

    Figure 1 shows two video streams as used under the present principles.
    Figure 2 shows one embodiment of video sample processing under the present principles.
    Figure 3 shows one embodiment of a logical map generated from a sample under the present principles.
    Figure 4 shows one embodiment of a method under the present principles.
    Figure 5 shows one embodiment of an apparatus under the present principles.

DETAILED DESCRIPTION

An approach for synchronization of separately processed video information is herein described. The need to synchronize two such streams arises in several situations.

For example, synchronization is needed if, while generating Color Remapping Information (CRI) metadata, two input video streams are used that have been processed differently, such as in two different colorspaces. CRI information is generated for each set of frames of the two videos streams exploiting the correspondance between co-located samples in each frame. The two video streams need to be synchronized temporally in order to generate the CRI metadata.

There exist other applcations where temporal synchronization of two input video streams is required. For instance, in order to perform a quality check or compare an encoded video stream with original content, video synchronization is important.

One such situation in which two inputs have different properties can be video streams in different colorspaces, such as CRI metadata generated for Ultra High Definition (UHD) Blue-ray discs that use a first input in ITU-R Recommendation BT.2020 format and a second input in ITU-R Recommendation BT.709 format. Still another is when CRI is generated for UHD Blur-ray disc uses a first High Dynamic Range (HDR) content and a second video content has a Standard Dynamic Range (SDR), possibly with tone mapping.

Another situation in which two video inputs have different properties and would require synchronization is when different grading is performed for a variety of input sources. Other such situations are when post-processing has been performed on different inputs video contents such as de-noising or filtering.

In these types of applications, checking whether co-located input samples are synchronizaed can be very difficult. One can use local gradient matching, but in the aforementioned applications, the gradient values can be very different.

In order to solve the problems in these and other such situations, the methods taught herein provide for the robust temporal synchronization of two video contents. One embodiment comprises generating logical maps for pictures of the two video contents to be synchronized and comparing the logical maps.

It is herein proposed to build a logical map comprising three possible values, for example, for a video content that is nearly independent from, and robust to, the color space change, tone mapping operation, post-processing or other such processing that causes the video contents to differ.

In one embodiment, for a given video signal component, and for a current sample, a sample value logical map is generated using current samples and those that are immediately neighboring the current samples. In one example, if a 3x3 centered local window N is used, the current sample and the immediately surrounding 8 samples will be used, so N=9. The method can be implemented for any of the video color components (Y, U, V, or R,G,B), all of them, or a subset only. However, for the YUV case, it can be done for the Y component only, which will reduce the amount of computation load while keeping good performance. In addition, the process can be performed for only some of the frames and for only a subset of the samples within one or more frames.

In one embodiment, the following steps are performed.

Generating a signed difference between a current sample (Cur(x)) and some of the spatial neighbors (Sn).

Generating a logical value as follows, representing:

$$X_{cur}(x,n,t) = (Sn > Cur(x)) \, ? \, (+1) : ((Sn < Cur(x)) \, ? \, {-1} : 0)$$

This is a logical value computation that can be equivalently re-written as:

```
if (Sn > Cur(x)) {
                 Xcur(x,n,t) = 1 ;
}
else if (Sn < Cur(x) ) {
                 Xcur(x,n,t) = -1 ;
}
else {
                 Xcur(x,n,t) = 0 ;
}
```

This enables generating a logical map (a picture with sample values being equal to +1, -1 or 0 only) that represents the local gradient directions.

Indeed, in the case where the two pictures that are to be temporally synchronized are represented in different color spaces (BT.2020 and BT.709 for example), the local gradient values (difference of the current sample with the neighbors) are different but the gradient directions are the same in general.

For each current sample Cur(x) processed, the N values are stored.

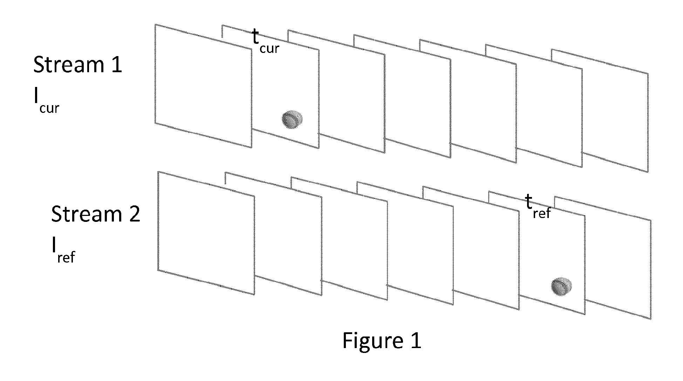

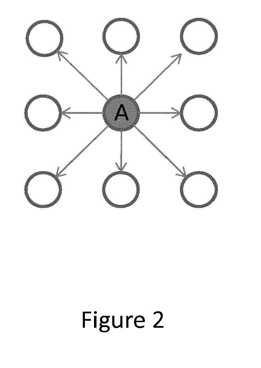

Figure 1 shows two video streams, Stream 1, known as $I_{cur}(t)$ (current) and Stream 2 (reference), known as $I_{ref}(t)$. $I_{cur}(t)$ is the stream which is to be synchronized to $I_{ref}(t)$. For a particular frame of Stream 1, determine, at a pixel location, the difference between that current pixel (labelled A) and the eight surrounding pixels, as shown in Figure 2. The number of surrounding pixels is not limited to eight, but assume it is eight for purposes of this example.

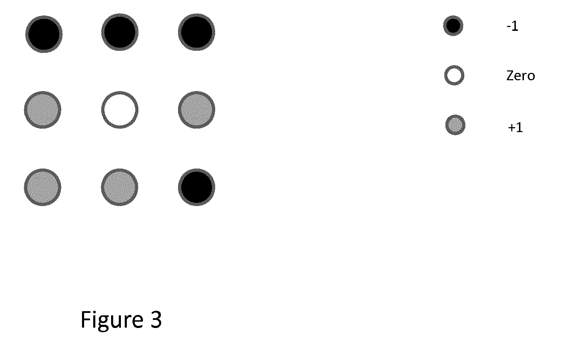

Then, map those eight differences, in addition to the current sample's difference (zero), to one of three values depending on whether the difference is positve, negative, or zero. For each pixel position processed, the result is a 3x3 map of values that represent positive, negative, or zero, as shown in Figure 3. For example, pixel A of Figure 2 results in the nine logical map values of Figure 3, based on the differences of A with its spatial neighbors.

Other logical map sizes can be used, but a 3x3 logical map is used in the present example for explanatory purposes.

The above steps are performed for samples of the pictures of the two video content streams ($I_{cur}(t)$ and $I_{ref}(t)$) to be synchronized. This results in a 3x3 map for each sample pixel position processed in the frame of the stream to be synchronized, $I_{cur}$. Similar processing is done to the video stream that this stream is to be synchronized to, $I_{ref}$.

These steps can be performed over a subset of frames, and on a subset of the spatial samples of those frames. For each of the samples processed, the method results in a mxm=N matrix of logical map values representative of some characteristic of the current sample relative to its spatial neighbors.

A synchronization measure between $I_{ref}(t_{ref})$ and $I_{cur}(t_{cur})$ corresponding to time instants $t_{ref}$ and $t_{cur}$, respectively, is then generated by counting the number of co-located logical map values that are equal:

$$\text{Cpt}(t_{ref}, t_{cur}) \mathrel{+}= \sum_{x \in I}^{W.H} \sum_{n}^{N} \quad X_{ref}(x, n, t_{ref}) == X_{cur}(x, n, t_{cur})$$

Two pictures $I_{ref}(t_{ref})$ and $I_{cur}(t_{cur})$ corresponding to the time instants $t_{ref}$ and $t_{cur}$ respectively, are considered as synchronized if their logical maps are similar. Each pixel processed results in nine logical map values when using a 3x3 logical map.

Xref(x,n,tref) is the logical map sample value for the sample location x, relative to neighbor n, in the picture $I_{ref}$, and at the time instant $t_{ref}$.

The value "Xref(x,n,tref) == Xcur(x,n,tcur)" is equal to "1" if the logical maps of the two video streams at location x relative to neighbor n have the same value at the position (x,n), equal to "0" else.

Then $Cpt(t_{ref}, t_{cur})$ is the sum of the logical map sample values that are identical when considering the pictures $I_{ref}(t_{ref})$ and $I_{cur}(t_{cur})$ corresponding to the time instants $t_{ref}$ and $t_{cur}$. To synchronize the picture $I_{cur}(t_{cur})$ with the video sequence $I_{ref}$, one has to find the value "$t_{ref}$" that maximizes the score of $Cpt(t_{ref}, t_{cur})$.

The reference picture that is best synchronizaed with the current picture $I_{cur}(t_{cur})$ corresponds to $I_{ref}(\text{Best } -t_{ref})$ where Best $-t_{ref}$ maximizes the value of cpt($t_{ref}, t_{cur}$). $Best\text{-}t_{ref} = Argmin(t_{ref} \in T) \{Cpt(t_{ref}, t_{cur})\}$ where T is a temporal window centered on $t_{cur}$ whose size is defined by the application.

These steps enable a user to match frames in the current stream to those in a reference stream, even if the two streams have been processed previously in different ways.

One variant to this approach is that the logical map is a binary map, such that:

$$X_n = (Sn > Cur(x)) \ ? \ (+1) : 0$$

A second variant to this approach is where

$$X_n = (S_n > (Cur(x)+threshold)) \ ? \ (+1) : ((S_n < (Cur(x)-threshold)) \ ? \ -1 : 0)$$

where "threshold" is to be defined by the application. In this case, the logical map is determined based on a value that is offset by the threshold value instead of being determined based on the sign of the differences, as in the previous examples.

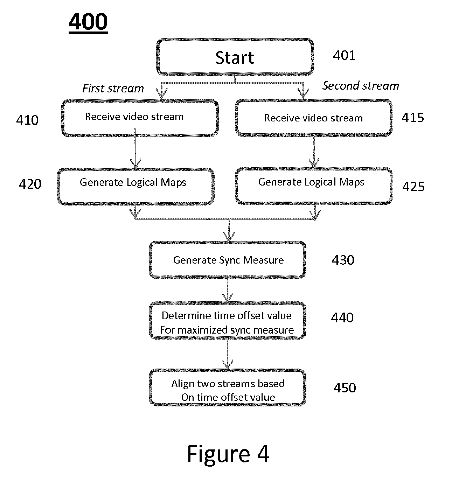

One embodiment of an encoding method 400 using the present principles is shown in Figure 4. The method commences at Start block 401 and proceeds to blocks 410 and 415 for receiving a first stream and a second stream. Control proceeds from blocks 410 and 415 to blocks 420 and 425, respectively, for generating logical maps based on characteristics of samples in each of the two streams relative to their spatial neighbors, such as spatial differences, for example. Alternatively, one of the two streams may have already had the characteristics, such as the spatial differences, determined and generation of its logical maps previously done and the logical maps may be stored and used from a storage device. Control proceeds from blocks 420 and 425 to block 430 for generating a synchronization measure based on the logical maps of the first and second streams. Control proceeds from block 430 to block 440 for determining a time offset value for maximizing a synchronization measure between the streams. Control then proceeds from block 440 to block 450 for aligning two streams based on the time offset value.

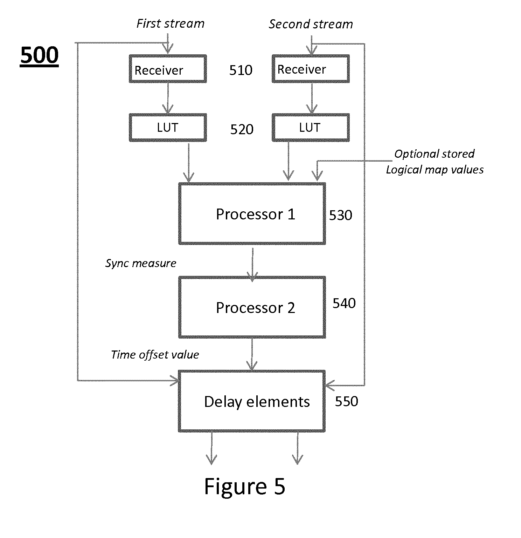

One embodiment of an apparatus 500 to synchronize two video streams is shown in Figure 5. The apparatus comprises a set of Receivers 510 having as input a first stream and possibly a second stream. The output of Receiver 510 is in signal connectivity with an input of Look-Up Table 520 for generating a logical map for pixels of at least the first stream. Alternatively, processing could be on a first stream only, and the logical map values of a second stream could have previously been generated and stored. The look up tables generate logical map values based on characteristics of samples in each of the streams relative to their respective spatial neighbors, such as differences between the samples and that sample's neighboring samples. The output of Look-Up Table 520 is in signal connectivity with the input of Processor 1 530. Whether the logical map values for a second stream are generated along with the first stream, or retrieved from memory, these values are input to a second input of Processor 1 530. Processor 1 generates a synchronization measure based on the number of logical map values of frames in the first stream that are equal to logical map values of frames of the second stream. The output of Processor 1 530 is in signal connectivity with the input of Processor 2 540, which determines the time offset value of frames based on a maximization of the synchronization measure value. The output of Processor 2 540 is in signal connectivity with the input of Delay Elements 550 for synchronizing one stream with the other. The outputs of Delay Elements 550 are the synchronized input streams.

The functions of the various elements shown in the figures can be provided through the use of dedicated hardware as well as hardware capable of executing software in association with additional software. When provided by a processor, the functions can be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read-only memory ("ROM") for storing software, random access memory ("RAM"), and non-volatile storage.

Other hardware, conventional and/or custom, can also be included. Similarly, any switches shown in the figures are conceptual only. Their function can be carried out through the operation of program logic, through dedicated logic, through the interaction of program control and dedicated logic, the particular technique being selectable by the implementer as more specifically understood from the context.

The present description illustrates the present principles. It will thus be appreciated that those skilled in the art will be able to devise various arrangements that, although not explicitly described or shown herein, embody the present principles and are included within its scope.

All examples and conditional language recited herein are intended for pedagogical purposes to aid the reader in understanding the present principles and the concepts contributed by the inventor(s) to furthering the art, and are to be construed as being without limitation to such specifically recited examples and conditions.

Moreover, all statements herein reciting principles, aspects, and embodiments of the present principles, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the present principles. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

Reference in the specification to "one embodiment" or "an embodiment" of the present principles, as well as other variations thereof, means that a particular feature, structure, characteristic, and so forth described in connection with the embodiment is included in at least one embodiment of the present principles. Thus, the appearances of the phrase "in one embodiment" or "in an embodiment", as well any other variations, appearing in various places throughout the specification are not necessarily all referring to the same embodiment.

In conclusion, the present principles enable two video streams to be synchronized, when they are of the same scene content, but have been processed in dissimilar ways..

## Claims

1. A method for synchronizing two disparately processed video streams, comprising:

   receiving (410) a first video stream having a first sample of pictures;
   receiving (415) a second video stream, said second video stream having a second sample of pictures spatially co-located with respect to said first sample of pictures;
   generating (420, 425) logical map values for said samples in said pictures of said first and second video streams based on characteristics of their respective samples relative to their spatial neighbors;
   generating (430) a synchronization measurement by finding, at a time offset value, a number of co-located logical map values that are equal in the first and second video streams;
   determining (440) the time offset value at which the synchronization measure is maximized for the second video stream relative to the first video stream; and
   aligning (450) the second video stream with the first video stream using said determined time offset value, whereby said first video stream and said second video stream have been dissimilarly processed such that their samples are not equal.

2. The method of Claim 1, wherein said characteristics are differences.

3. The method of Claim 1, wherein the logical map values comprise a 3x3 matrix of values for each sample processed.

4. The method of Claim 1, wherein only luminance component values are used in determining a synchronization measure.

5. The method of Claim 1, wherein the logical map values comprise one of two values.

6. The method of Claim 1, wherein the logical map values are generated based on differences of samples with a threshold value applied and their spatial neighbors.

7. An apparatus for synchronization of two video streams, comprising:

   a first receiver (510) for a first video stream having a first sample of pictures;
   a second receiver (510) for a second video stream, said second video stream having a second sample of pictures spatially co-located with respect to said first sample of pictures;
   a look up table (520) to generate logical map values for said samples in said pictures of said first and second video streams based on characteristics of their respective samples relative to their spatial neighbors;
   a first processor (530) that generates a synchronization measurement by finding, at a time offset value, a number of co-located logical map values that are equal in the first and second video streams;
   a second processor (540) that determines the time offset value at which the synchronization measure is maximized for the second video stream relative to the first video stream; and
   delay elements (550) to align the second video stream with the first video stream using said determined time offset value, whereby said first video stream and said second video stream have been dissimilarly processed such that their samples are not equal.

**8.** The apparatus of Claim 7, wherein said characteristics are differences.

**9.** The apparatus of Claim 7, wherein the logical map values comprise a 3x3 matrix of values for each sample processed.

**10.** The apparatus of Claim 7, wherein only luminance component values are used in determination of a synchronization measure.

**11.** The apparatus of Claim 7, wherein the logical map values comprise one of two values.

**12.** The apparatus of Claim 7, wherein the logical map values are generated based on differences of samples with a threshold value applied and their spatial neighbors.

**13.** A method for synchronizing two video streams, comprising:

receiving a first video stream having a first sample of pictures;
retrieving a second video stream, said second video stream having a second sample of pictures spatially co-located with respect to said first sample of pictures;
generating logical map values for said samples in said pictures of said first and second video streams based on characteristics of their respective samples relative to their spatial neighbors;
generating a synchronization measurement by finding, at a time offset value, a number of co-located logical map values that are equal in the first and second video streams;
determining the time offset value at which the synchronization measure is maximized for the second video stream relative to the first video stream; and
aligning the second video stream with the first video stream using said determined time offset value, whereby said first video stream and said second video stream have been dissimilarly processed such that their samples are not equal.

Figure 1

Figure 2

Figure 3

**400**

```
                    ┌─────────────────────┐
                    │        Start        │   401
                    └─────────────────────┘
        First stream                      Second stream
    ┌─────────────────────┐      ┌─────────────────────┐
410 │ Receive video stream│      │ Receive video stream│  415
    └─────────────────────┘      └─────────────────────┘

    ┌─────────────────────┐      ┌─────────────────────┐
420 │ Generate Logical Maps│     │ Generate Logical Maps│  425
    └─────────────────────┘      └─────────────────────┘

              ┌─────────────────────────┐
              │  Generate Sync Measure   │   430
              └─────────────────────────┘

              ┌─────────────────────────┐
              │ Determine time offset value│  440
              │ For maximized sync measure │
              └─────────────────────────┘

              ┌─────────────────────────┐
              │  Align two streams based │   450
              │   On time offset value   │
              └─────────────────────────┘
```

# Figure 4

**500**

First stream          Second stream

| Receiver | 510 | Receiver |

| LUT | 520 | LUT |

Optional stored
Logical map values

Processor 1          530

Sync measure

Processor 2          540

Time offset value

Delay elements          550

# Figure 5

Europäisches
Patentamt

European
Patent Office

Office européen
des brevets

# EUROPEAN SEARCH REPORT

Application Number

EP 15 30 6368

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/300933 A1 (THORSON DEAN E [US]) 14 November 2013 (2013-11-14) * abstract; figures 2,3,4,6 * * paragraphs [0015], [0028], [0035], [0058] - [0060] * ----- | 1-13 | INV. H04N21/43 H04N5/04 |
| A | EP 2 326 091 A1 (NTT DOCOMO INC [JP]) 25 May 2011 (2011-05-25) * abstract; figures 3,6 * * paragraphs [0023], [0032] - [0034] * ----- | 1-13 | |

**TECHNICAL FIELDS
SEARCHED          (IPC)**

H04N

The present search report has been drawn up for all claims

| Place of search | Date of completion of the search | Examiner |
|---|---|---|
| The Hague | 8 April 2016 | Güvener, Cem |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                                                      
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 30 6368

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2016

| Patent document cited in search report | | Publication date | Patent family member(s) | | Publication date |
|---|---|---|---|---|---|
| US 2013300933 | A1 | 14-11-2013 | US 2013300933 A1 | | 14-11-2013 |
| | | | WO 2013170027 A1 | | 14-11-2013 |
| EP 2326091 | A1 | 25-05-2011 | CN 102075668 A | | 25-05-2011 |
| | | | EP 2326091 A1 | | 25-05-2011 |
| | | | JP 5165743 B2 | | 21-03-2013 |
| | | | JP 2011109656 A | | 02-06-2011 |
| | | | US 2011122315 A1 | | 26-05-2011 |

EPO FORM P0459

For more details about this annex : see Official Journal of the European Patent Office, No. 12/82